# EUROPEAN PATENT SPECIFICATION

(11) **EP 1 852 342 B1**
(45) Date of publication and mention of the grant of the patent: **06.01.2010**
(21) Application number: 06113566.1
(22) Date of filing: 05.05.2006
(51) Int. Cl.: B62K 5/04, B62K 5/08

(54) **Three-wheel vehicle**
Dreiradfahrzeug
Véhicule à trois roues

(43) Date of publication of application: 07.11.2007
(73) Proprietor: Bombardier Recreational Products Inc., Valcourt, Québec J0E 2LO (CA)
(72) Inventor: Bedard, Bruno, Valcourt, Quebec J0E2L0 (CA); Duval, Dany, Valcourt, Quebec J0E2L0 (CA)
(74) Representative: Solf, Alexander

(56) References cited:
- WO-A-03/070547
- WO-A-03/071162
- US-A- 4 787 470
- US-A1- 2001 024 042
- US-A1- 2005 039 967
- PATENT ABSTRACTS OF JAPAN vol. 010, no. 070 (M-462), 19 March 1986 (1986-03-19) -& JP 60 213577 A (SUZUKI JIDOSHA KOGYO KK), 25 October 1985 (1985-10-25)

## Description

### FIELD OF THE INVENTION

The present invention relates to a three-wheel vehicle.

### BACKGROUND OF THE INVENTION

Typical three-wheel vehicles having a single rear wheel and a pair of front wheels are based on a motorcycle-like design and include a frame onto which all mechanical, electrical and fairing or bodywork components are mounted. The frame typically extends from the rear suspension of the vehicle to the front portion or nose of the vehicle beyond the front wheels and front suspension of the vehicle. Bodywork panels are mounted to the frame to give the vehicle an aesthetically pleasing look. Similarly, the nose of the vehicle is made of body parts mounted to the frame to hide the mechanical components as well as the frame itself.

The basic layout of a three-wheel vehicle as described above has some drawbacks. For instance, the frame requires an elaborate structure to accommodate the entire bodywork as well as all other mechanical and electrical components. Also, the manufacturing assembly of the vehicle is complicated by the fact that all mechanical, electrical and fairing components are mounted onto an elaborate frame because most of the components must be individually mounted onto the frame. Because of the complexity of the assembly process, the vehicle must be assembled at the manufacturing plant and cannot easily be shipped in subsections. The basic layout of prior three-wheel vehicle renders the assembly as well as the shipping of the vehicle tedious. These drawbacks have an incidence on the cost of the finished product.

International Patent Application WO 03/070547 A1 in combination with US Provisional Application No. 60/358,390, which is incorporated by reference into WO 03/070547 A1, as well as International Patent Application WO 03/071162 A1 and US Patent Application US 2005/0039967 A1 each disclose a three-wheel vehicle of such a known generic kind comprising a frame having a front portion and a rear portion and a plurality of fairing components connected directly to the front portion of the frame.

US Patent Application 2001/0024042 A1 discloses a four-wheeled all-terrain vehicle having a body frame having a front portion and a rear portion and a front guard joined to the front end part of the body frame.

Therefore, there is a need for an improved configuration for a three-wheel vehicle to alleviate the drawbacks described above.

### STATEMENT OF THE INVENTION

According to the invention it is provided a three-wheel vehicle according to claim 1. Preferred embodiments of the present invention are laid down in the dependent claims. Especially, a three-wheel vehicle is provided having a modular front structure removably mounted to the front portion of the frame via a plurality of anchoring points, the modular front structure being located at least in part between the front left wheel and the front right wheel and including a cavity therein defining a storage compartment. The modular front structure thereby supporting a plurality of fairing components.

Furthermore a plurality of attachment points is provided for securing the plurality of fairing components directly to the modular front structure.

Another aspect of some embodiments of the present invention is that the modular front structure is a molded component including reinforcement elements to increase a load bearing capacity of the modular front structure. Preferably, the reinforcement elements include lattice structures.

Another aspect of some embodiments of the present invention is to provide a modular front structure including a top portion having an opening which gives access to the storage compartment, the width of the storage compartment being wider than a width of the opening.

Another aspect of some embodiments of the present invention is to provide a three-wheel vehicle having a modular front structure removably mounted to the front portion of the frame wherein the modular front structure being located forward of the front wheel axis.

Another aspect of some embodiments of the present invention is to provide a modular front structure wherein some aerodynamic components of the three-wheel vehicle are secured directly to the modular front structure.

For the purpose of the present application, the term "modular" is used to define an element as a unit or a sub-assembly that can be handled as a unit.

Additional and/or alternative objects, features, aspects and advantages of the embodiments of the present invention will become apparent from the following description, the accompanying drawings and the appended claims.

### BRIEF DESCRIPTION OF THE DRAWINGS

For a better understanding of the present invention as well as other aspects and further features thereof, reference is made to the following description which is to be used in conjunction with the accompanying drawings, wherein:
FIG. 1 is a front perspective view of a three-wheel vehicle in accordance with an embodiment of the invention;
FIG. 2 is a front elevational view of the three-wheel vehicle illustrated in Figure 1;
FIG. 3 is a side elevational view of the three-wheel vehicle illustrated in Figures 1 and 2;
FIG. 4 is a top plan view of the three-wheel vehicle illustrated in Figures 1 to 3;
FIG. 5 is an exploded top plan view of the three-wheel vehicle illustrated in Figures 1 to 4;
FIG. 6 is a front perspective view of a modular front structure in accordance with an embodiment of the invention;
FIG. 7 is a side elevational view of the modular front structure illustrated in Fig. 6;
FIG. 8 is a front elevational view of the modular front structure illustrated in Figs. 6 and 7; and
FIG. 9 is a side elevational view of a modular front structure mounted onto a frame.

### DESCRIPTION OF PREFERRED EMBODIMENT(S)

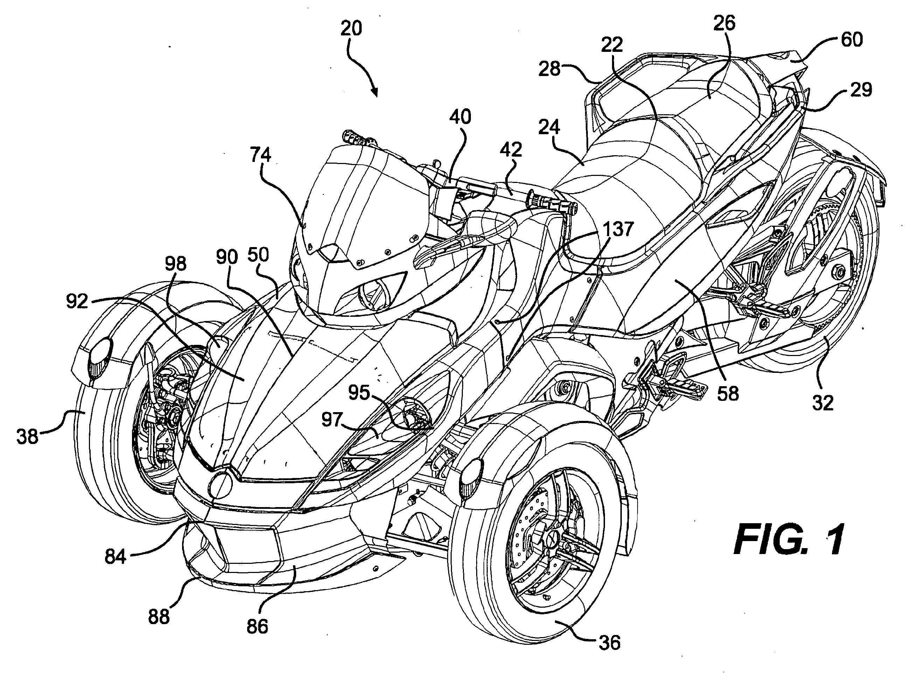

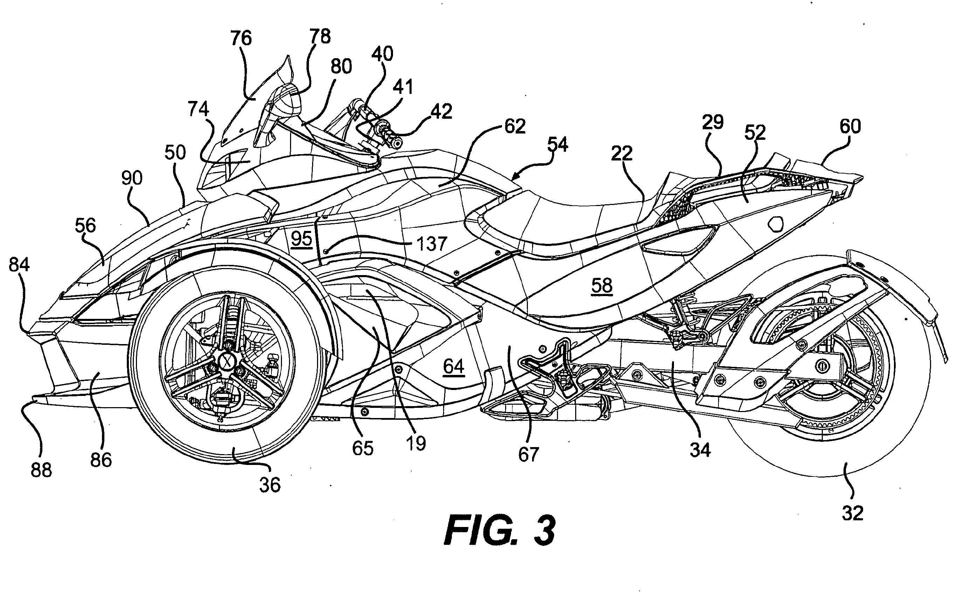

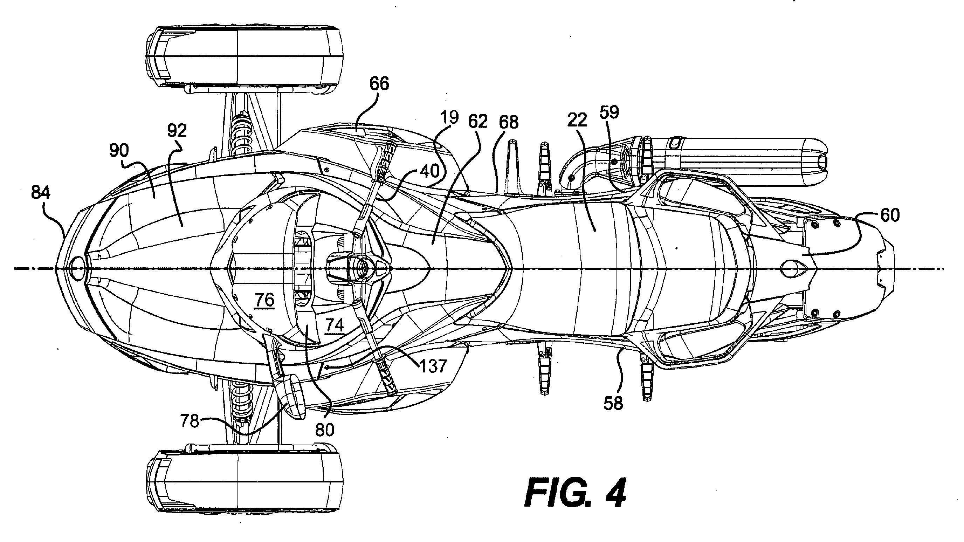

Figures 1 to 4 illustrate a three-wheel vehicle 20 in accordance with one specific embodiment of the invention. The three-wheel vehicle 20 is a straddle-type vehicle comprising a straddle seat 22 adapted to accommodate one or two adult sized riders. The straddle seat 22 includes a forward seat portion 24 for the driver and a rear seat portion 26 for a passenger. A pair of handles 28 and 29 is provided on both sides of the rear seat segment 26 for the passenger sitting therein to grip with his hands to maintain his balance.

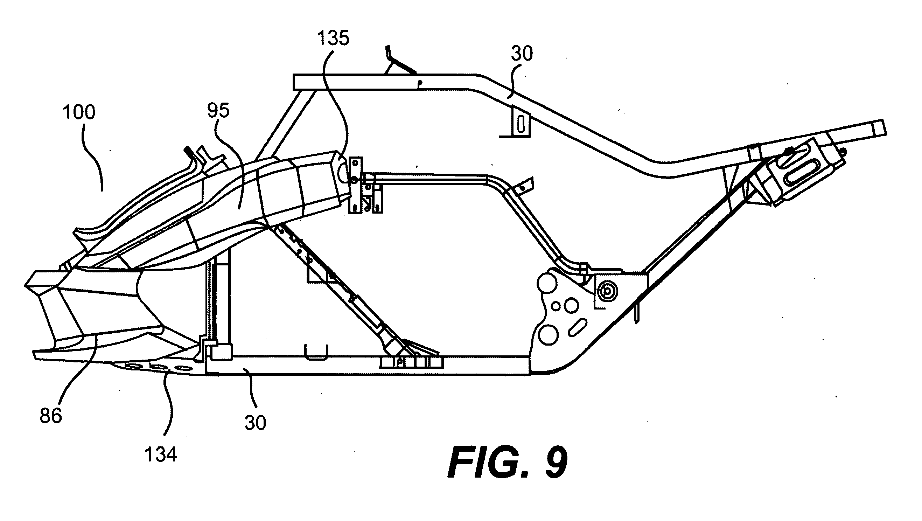

The three-wheel vehicle 20 includes a frame 30 (Fig. 9) underneath the general bodywork 50 of the vehicle 20 that supports and houses an engine 19 located between the straddle seat 22 and the front wheel assemblies 36 and 38. Engine 19 could be any type of power source such as an internal combustion engine or an electric motor if desired. A single rear wheel assembly 32 with a tire suitable for road use is suspended from the vehicle 20 via a rear suspension system 34 at the rear of the frame 30. The single rear wheel assembly 32 is operatively connected to the engine 19 through any suitable power transmission mechanism such as gearbox or continuously-variable transmission coupled to an endless belt, chain, or driveshaft assembly. A pair of front wheel assemblies 36 and 38 are suspended from the front of the frame 30 through suitable suspension assembly such as upper and lower A-arms. Dampening mechanisms such as shock absorbers and coil springs assembly are connected to the suspension assembly to increase ride comfort and vehicle stability. Front wheel assemblies 36 and 38 have road tires mounted thereon.

A steering assembly 40 is coupled to the front wheel assemblies 36 and 38 and is supported by the frame 30 for transmitting steering commands to the front wheel assemblies 36 and 38. The steering assembly 40 includes a steering column 41 and a steering control mechanism 42, such as a handle bar, steering wheel, or other known steering control mechanism.

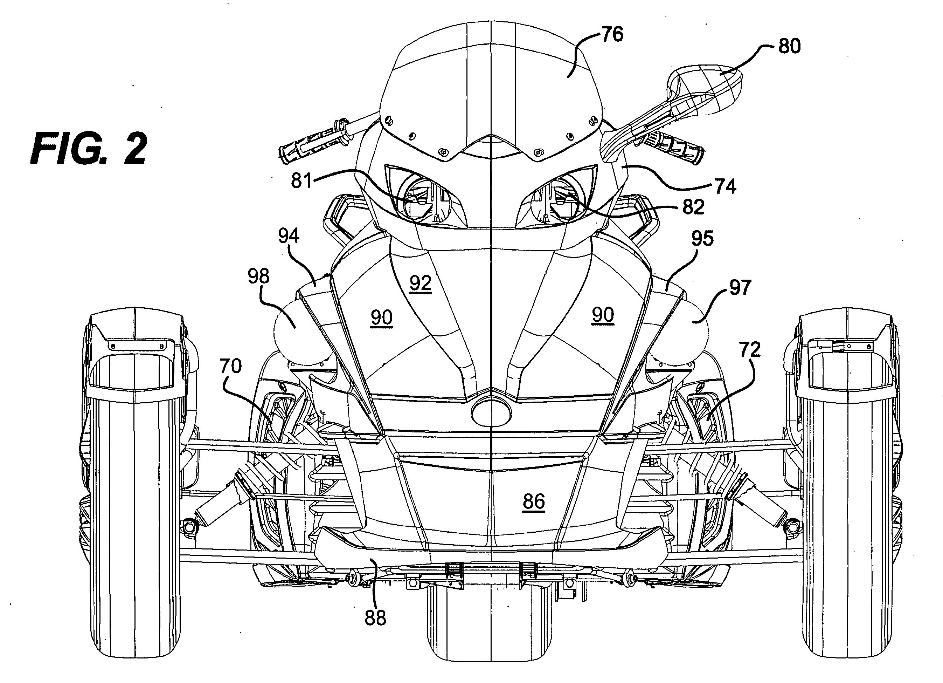

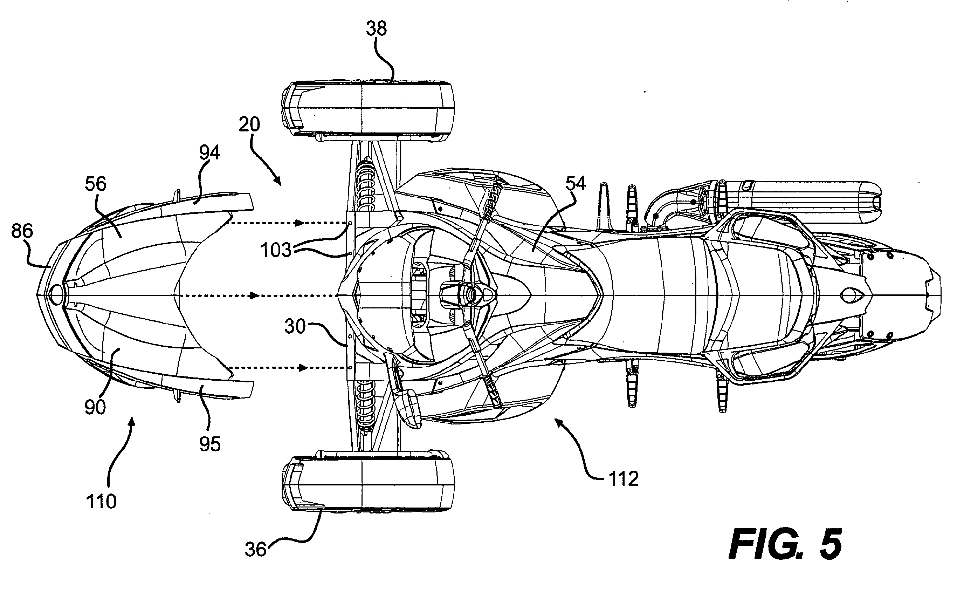

Three-wheel vehicle 20 includes an elaborate bodywork 50 covering the mechanical components of the vehicle. Bodywork 50 includes a rear portion 52, a central portion 54 and a front portion 56. The rear portion 52 consists of the straddle seat 22, the handles 28 and 29, fairing side panels 58 and 59 disposed below and on each side of straddle seat 22, and a rear deflector 60 to prevent ingress of debris or water thrown by the rear wheel assembly 32. The central portion 54 consists of an upper fairing 62 extending from the forward end of the straddle seat 22 to the steering assembly 40 and extending downwardly on both sides of vehicle 20 to cover the top portion of the engine 19 (not shown). The upper fairing 62 extends rearward to merge with the side panels 58 and 59 below straddle seat 22. The central portion 54 also features a lower fairing 64 consisting of a left air intake cover 65 and a right air intake cover 66 and lower side panels 67 and 68 extending from the air intake covers 65 and 66 respectively towards the rear of the vehicle 20 to merge with the side panels 58 and 59. The left air intake cover 65 protects the radiator of the vehicle whereas the right air intake cover 66 protects the oil cooler of the vehicle 20. The air intake covers 65 and 66 also enclose the lower portion of the engine and the lower side panels 67 and 68 enclose the transmission and the attachment points of the rear suspension 34. The front facing portion of the air intake covers 65 and 66 includes air intake openings 70 and 72 adapted to scoop and direct air towards the radiator and oil cooler to provide sufficient air flow for efficient heat exchange. The central portion 54 also includes an upper segment 74 surrounding the steering assembly 40 to which is mounted a windshield 76, at least one side view mirror 78 and a dashboard panel 80 for mounting various gauges and indicators. The upper segment 74 may optionally include a single headlight or a pair of headlights 81 and 82 as illustrated in Fig. 2. The upper segment 74 of the central portion 54 extends from the upper fairing 62 to the front portion 56 of the bodywork 50 to enclose the steering column 41. All the elements of the rear and central portions 52 and 54 of bodywork 50 are typically secured directly onto the frame 30 illustrated in Fig. 5.

The front portion 56 of the bodywork 50 extends from the central portion 54 all the way to the nose 84 of vehicle 20. Front portion 56 includes a lower deflector 86 extending laterally and rearwardly from the nose 84 to the front suspension on either side of vehicle 20. Lower deflector 86 defines the lower portion of the front end of vehicle 20 and is adapted to direct air flow towards the air intake openings 70 and 72 of the air intake covers 65 and 66. Lower deflector 86 may feature a lower lip 88 to provide a well defined channel to direct event air flow to the air intake covers 65 and 66 and to prevent air from above the lower lip 88 to flow under the vehicle 20. The lower lip 88 may thereby add some aerodynamic downforce to the front of the vehicle 20. The front portion 56 of the bodywork 50 also features a hood panel 90 extending from the lower deflector 86 to the upper segment 74 of central portion 54 which defines the upper portion of the front end of vehicle 20 and covers a storage compartment underneath and is therefore adapted to be opened and closed. The hood panel 90 is designed to direct air flow over and around the vehicle 20 and may further comprises air channels 92 to provide specific aerodynamic flow over and around the vehicle 20. Because of its large surface area, hood panel 90 provides a substantial amount of aerodynamic downforce to the front of the vehicle 20. The front portion 56 of the bodywork 50 also includes a pair of side panels 94 and 95 extending between the lower deflector 86 and each side of hood panel 90 and rearwardly from lower deflector 86 to the upper fairing 62 of central portion 54. Side panels 94 and 95 may each include a headlights 97 and 98 and receptacle therefor.

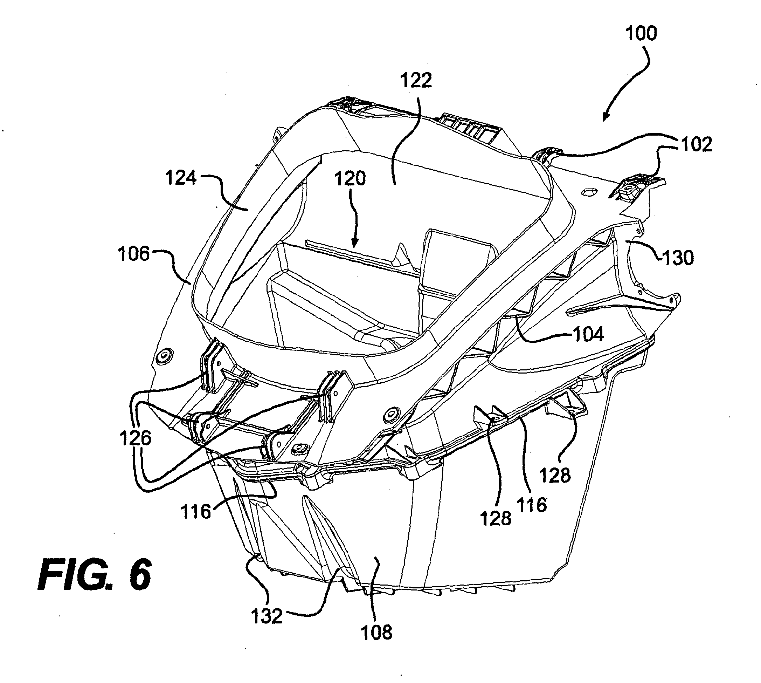

As illustrated in Fig. 5, The entire front portion 56 of the bodywork 50 is removably mounted to the front portion of frame 30. The hood panel 90, side panels 94 and 95 and the lower deflector 86 are mounted on a modular front structure 100 illustrated in Fig. 6. The modular front structure 100 includes a series of anchoring brackets 102 which are precisely aligned with respective anchoring holes 103 located on the front portion of the frame 30 so that the entire front portion 56 of the bodywork 50 may be easily mounted to the frame 30 with fasteners. Obviously, anchoring brackets may be located on the frame 30 and anchoring holes may be located on the modular front structure 100. As illustrated in Fig. 5, the modular front structure 100 is located forward of the front wheel axis of the three-wheel vehicle 20. The front wheel axis referring to a line drawn through the centers of the front wheels 36 and 38. The three-wheel vehicle 20 may be easily disassembled into two sections 110 and 112 such that the three-wheel vehicle 20 may be encased into a smaller and shorter crate or container for ease of transportation. The front wheel assemblies 36 and 38 may also be removed to further reduce the over length of section 112 allowing the use of an even shorter crate or container.

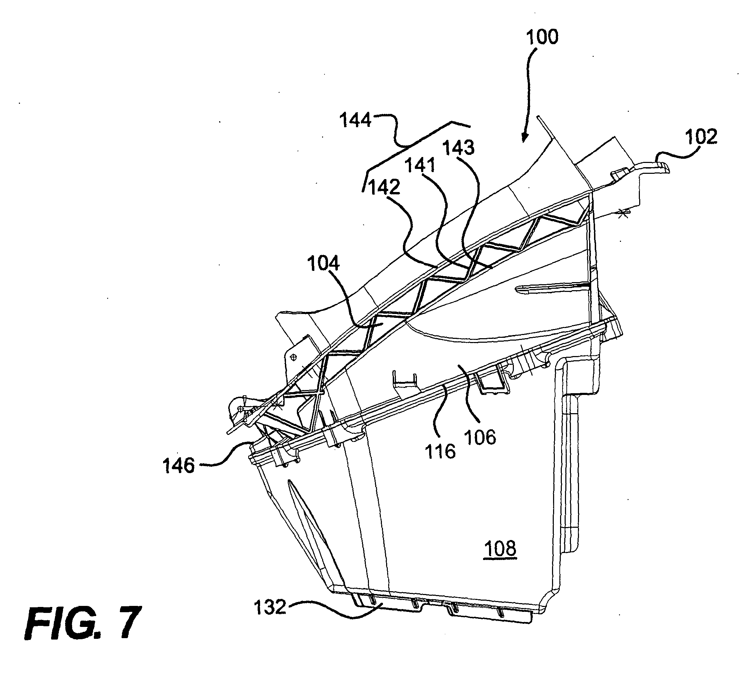

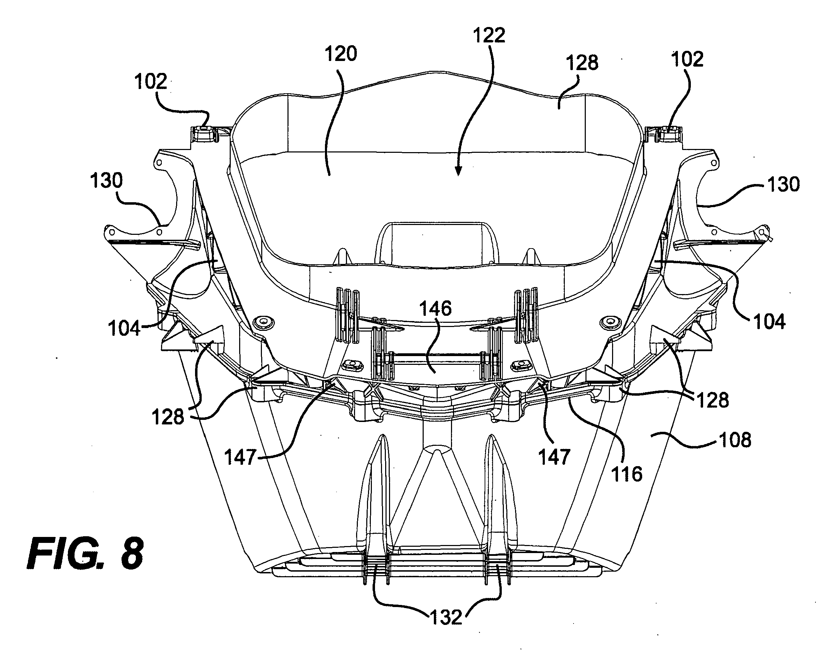

The modular front structure 100 illustrated in Figs. 6 to 8 is a molded plastic component made of an upper section 106 and a lower section 108, both being molded components which are permanently assembled by welding, gluing or any other known method to form the modular front structure 100. Other manufacturing processes may be used that will produce a seamless modular front structure 100. The upper section 106 is assembled to the lower section 108 at the seam 116. The upper section 106 of modular front structure 100 includes reinforcement elements 104 to increase the load bearing capacity of modular front structure 100. As illustrated more specifically in Fig. 7, each reinforcement element 104 is in the form of a lattice structure 141 sandwiched between an upper segment 142 and a lower segment 143 to form an integrated beam 144. The reinforcement elements 104 extend on both sides of the upper section 106 from the anchoring brackets 102 to the front segment 146 of the upper section 106. As illustrated in Fig. 8, a lattice structure 147 is provided on the front segment 146 that bridge the two reinforcement elements 104 to provide increased rigidity to modular front structure 100. Since modular front structure 100 is supporting the front portion 56 of the bodywork 50 which includes aerodynamic components that may generate substantial aerodynamic downforces when three-wheel vehicle 20 is moving at speeds of 40 km/hr or more, the modular front structure 100 must be sufficiently rigid to bear these forces and transfer them to the frame 30. The molded construction of modular front structure 100 including the lattice structure 141 and 147 provide added rigidity for the structure to bear these aerodynamic loads.

Modular front structure 100 includes a large cavity defining a storage compartment 120. The storage compartment 120 is sized to receive at least one helmet and may include a removable insert having separate storage compartments formed therein. Access to storage compartment 120 is provided through an opening 122. The opening 122 is circumscribed by a boundary edge or lip 124 which further increases the rigidity of the modular front structure 100.

Attachment points 126 are provided to pivotally mount the hood panel 90 to the upper section 106 of modular front structure 100 to close the storage compartment 120. The side of the hood panel 90 facing the storage compartment 120 is preferably designed to receive and unite with the edge or lip 124 of the modular front structure 100 to provide a tight fit of the two components. A locking mechanism (not shown) is preferably used to secure the hood panel 90 to the modular front structure 100 when in the closed position.

As best shown in Fig. 8 which is a front elevational view of modular front structure 100, the storage compartment 120 which is defined by the inside walls of the upper lower portion 106 and 108 is larger and wider than opening 122. Specifically, lower portion 108 which is permanently affixed to the upper portion 106 at the seam 116, is wider than the opening 122. The molded construction of modular front structure 100 allows an efficient use of the space available such that the storage compartment 120 has a maximum volume from the available space at the front of three-wheel vehicle 20.

Modular front structure 100 further includes attachment brackets 128 to secure the side panels 94 and 95 and the lower deflector 86 and may include receptacles 130 for mounting headlights.

As best shown in Figs. 7 and 8, the lower section 108 of modular front structure 100 includes a pair of channels 132 which extend upwardly onto the front end of the lower section 108. Channels 132 are adapted to receive a pair of brackets 134 which are mounted via fasteners to the bottom of the front end of fame 30 as illustrated in Fig. 9. Brackets 134 are anchored within the channels 132 and provide additional support for modular front structure 100.

The side panels 94 and 95, the headlights 97 and 98, the lower deflector 86 as well as the brackets 134 and the hood panel 90 are preferably assembled to the modular front structure 100 prior to mounting the modular front structure 100 to the front portion of frame 30 such that the entire front end of three-wheel vehicle 20 may be mounted to the frame 30 as one piece unit. To fasten the modular front structure 100 to the front portion of frame 30, the hood panel 90 must be in the open position in order to give access to the anchoring brackets 102 and holes 103. As shown in Fig. 9, the modular front structure 100 may also be mounted onto the front portion of frame 30 without the hood panel 90 in order to give access to the anchoring brackets 102 and holes 103. Hood panel 90 is thereafter assembled to the modular front structure 100 to complete the assembly. Side panels 94 and 95 which extend rearwardly to merge with the upper fairing 62 of central portion 54 are provided with recesses 135 designed to fit underneath the forwardmost portion of upper fairing 62. Fasteners 137 are used to secure the two components together. The modular front structure 100 is easily removed from the frame 30 or easily assembled to the frame 30 as one large component without requiring the removal or assembly of the side panels 94 and 95, the headlights 97 and 98, the lower deflector 86 and the hood panel 90. The process of assembly or disassembly is simplified and requires few tools.

## Claims

1. A three-wheel vehicle comprising:
a rear section (112) having:
a frame (30) having a front portion and a rear portion;
an engine (19) supported by the frame (30);
a front left wheel (36) and a front right wheel (38), each connected to the front portion of the frame (30) via a front suspension;
a single rear wheel (32) connected to the rear portion of the frame (30) via a rear suspension (34), at least one of the wheels (32, 36, 38) being operatively connected to the engine (19);
a steering assembly (40) supported by the frame (30) and operatively connected to the front left wheel (36) and the front right wheel (38); and
a straddle seat (22) disposed on the frame (30); and
a front section (110) having:
a plurality of fairing components (86, 94, 95) removably connected to the front portion of the frame (30);
**characterized in that:**
the front section (110) further comprises a modular front structure (100), the modular front structure (100) supporting the plurality of fairing components (86, 94, 95), the modular front structure (100) being located at least in part between the front left wheel (36) and the front right wheel (38) and being removably mounted to the front portion of the frame (30) via a plurality of anchoring points (102, 103, 132, 134), the modular front structure (100) including a cavity therein defining a storage compartment (120);
the plurality of fairing components (86, 94, 95) is adapted to be assembled to the modular front structure (100) via a plurality of attachment points (126, 128, 130) prior to removably mounting the modular front structure (100) to the front portion of the frame (30);
the front section (110) is removably mounted as a one piece unit to the rear section (112) by removably mounting the modular front structure (100) to the front portion of the frame (30); and
removing the modular front structure (100) from the front portion of the frame (30) reduces a length of the three-wheel vehicle.

2. A three-wheel vehicle as defined in claim 1, **characterized in that** when the modular front structure (100) is removed from the front portion of the frame (30), removing the front left wheel (36) and the front right wheel (38) from the front portion of the frame (30) further reduces the length of the three-wheel vehicle.

3. A three-wheel vehicle as defined in any one of claims 1 and 2, **characterized in that**:
the front left wheel (36) and the front right wheel (38) each have a center and a line passing through the centers of both front wheels (36, 38) defining a front wheel axis; and
when the front section (110) is removably mounted to the rear section (112) the modular front structure (100) is located forward of the front wheel axis.

4. A three-wheel vehicle as defined in any one of claims 1 to 3, **characterized in that**:
one of the modular front structure (100) and the front portion of the frame (30) comprises anchoring brackets (102);
the other one of the modular front structure (100) and the front portion of the frame (30) comprises holes (103); and
wherein when the modular front structure (100) is removably mounted to the front portion of the frame (30) the holes (103) are aligned with the anchoring brackets (102) and fastened thereto via fasteners.

5. A three-wheel vehicle as defined in claim 4, **characterized in that**:
the modular front structure (100) includes a top portion (106) having an opening (122) giving access to the storage compartment (120); and
an access panel (90) is movably connected to the modular front structure (100) for covering the top portion (106) of the modular front structure (100) and closing the opening (122).

6. A three-wheel vehicle as defined in claim 5, **characterized in that**:
the access panel (90) can be removed from the modular front structure (100) to give access to the anchoring brackets (102) and holes (103) for removably mounting the modular front structure (100) to the front portion of the frame (30).

7. A three-wheel vehicle as defined in claim 5, **characterized in that**:
the access panel (90) is movable relative to the modular front structure (100) between an open position and a closed position, the access panel (90) giving access to the anchoring brackets (102) and holes (103) when in the open position for removably mounting the modular front structure (100) to the front portion of the frame (30).

8. A three-wheel vehicle as defined in any one of claims 1 to 7, **characterized in that**:
one of the modular front structure (100) and the front portion of the frame (30) comprises brackets (134); and
the other one of the modular front structure (100) and the front portion of the frame (30) comprises channels (132) adapted to receive the brackets (134) for removably mounting the modular front structure (100) to the front portion of the frame (30) via fasteners.

9. A three-wheel vehicle as defined in any one of claims 4 to 8, **characterized in that** when the modular front structure (100) is mounted to the front portion of the frame (30) the fasteners can be accessed for removing the modular front structure (100) from the front portion of the frame (30) without disassembling the plurality of fairing components (86, 94, 95) from the modular front structure (100).

10. A three-wheel vehicle as defined in claim 5, **characterized in that** a width of the storage compartment (120) is wider than a width of the opening (122).

11. A three-wheel vehicle as defined in any one of claims 1 to 10, further comprising a plurality of rear fairing components (62, 64) assembled to the rear section (112);
**characterized in that** at least one of the plurality of fairing components (86, 94, 95) of the front section (110) is removably connected via fasteners (137) to at least one of the plurality of rear fairing components (62, 64) of the rear section (112) when the front section (110) is removably mounted to the rear section (112).

12. A three-wheel vehicle as defined in any one of claims 1 to 11, **characterized in that** the plurality of fairing components (86, 94, 95) is removably connectable to the front portion of the frame (30) via fasteners.

13. A three-wheel vehicle as defined in any one of claims 1 to 12, **characterized in that** the modular front structure (100) is a molded component including reinforcement elements (104) to increase a load bearing capacity of the modular front structure (100).

## Patentansprüche

1. Dreirädriges Fahrzeug, umfassend:
einen hinteren Abschnitt (112) umfassend:
einen Rahmen (30) mit einem vorderen Abschnitt und einem hinteren Abschnitt;
einen Motor (19), der sich am Rahmen (30) abstützt;
ein linkes Vorderrad (36) und ein rechtes Vorderrad (38), wobei beide am vorderen Teil des Rahmens (30) über eine Vorderradaufhängung in Wirkverbindung stehen;
ein einzelnes Hinterrad (32), das am hinteren Abschnitt des Rahmens (30) über eine Hinterradaufhängung (34) verbunden ist, wobei wenigstens eins der Räder (32, 36, 38) mit dem Motor (19) in Wirkverbindung steht;
eine Lenksäulenbaugruppe (40), die sich am Rahmen (30) abstützt und sowohl mit dem linken Vorderrad (36) als auch mit dem rechten Vorderrad (38) in Wirkverbindung steht sowie
einen Spreizsitz (22), der am Rahmen (30) angeordnet ist sowie einen vorderen Abschnitt (110), umfassend:
eine Vielzahl an Verkleidungsbauteilen (86, 94, 95), die entfernbar mit dem vorderen Abschnitt des Rahmens (30) verbunden sind;
**dadurch gekennzeichnet, dass:**
der vordere Abschnitt (110) ferner eine modulare Vorderstruktur (100) umfasst, wobei die modulare Vorderstruktur (100) die Vielzahl an Verkleidungsbauteilen (86, 94, 95) stützt, wobei die modulare Vorderstruktur (100) sich wenigstens teilweise zwischen dem linken Vorderrad (36) und dem rechten Vorderrad (38) befindet und entfernbar am vorderen Abschnitt des Rahmens (30) über eine Vielzahl an Verankerungspunkten (102, 103, 132, 134) befestigt ist, wobei die modulare Vorderstruktur (100) eine darin enthaltene Aushöhlung enthält, die einen Stauraum (120) definiert;
die Vielzahl an Verkleidungsbauteilen (86, 94, 95) derart angepasst ist, um an der modularen Vorderstruktur (100) über eine Vielzahl an Befestigungspunkten (126, 128, 130) vor dem entfernbaren Befestigen der modularen Vorderstruktur (100) am vorderen Abschnitt des Rahmens (30) zusammengebaut zu werden;
der vordere Abschnitt (110) als eine einstückige Einheit entfernbar am hinteren Abschnitt (112) durch entfernbares Befestigen der modularen Vorderstruktur (100) am vorderen Abschnitt des Rahmens (30) befestigt wird und
das Entfernen der modularen Vorderstruktur (100) vom vorderen Abschnitt des Rahmens (30) die Länge des dreirädrigen Fahrzeugs reduziert.

2. Dreirädriges Fahrzeug nach Anspruch 1, **dadurch gekennzeichnet, dass** wenn die modulare Vorderstruktur (100) vom vorderen Abschnitt des Rahmens (30) entfernt wird, das Entfernen des linken Vorderrads (36) und des rechten Vorderrads (38) vom vorderen Abschnitt des Rahmens (30) die Länge des dreirädrigen Fahrzeugs weiter reduziert.

3. Dreirädriges Fahrzeug nach einem der Ansprüche 1 und 2, **dadurch gekennzeichnet, dass:**
das linke Vorderrad (36) und das rechte Vorderrad (38) jeweils eine Mitte und eine Line aufweisen, die durch die Mitten beider Vorderräder (36, 38) hindurchführt, wobei eine Vorderradachse definiert wird und
sofern der vordere Abschnitt (110) entfernbar am hinteren Abschnitt (112) befestigt ist, sich die modulare Vorderstruktur (100) nach vorne zur Vorderradachse befindet.

4. Dreirädriges Fahrzeug nach einem der Ansprüche 1 bis 3, **dadurch gekennzeichnet, dass:**
entweder die modulare Vorderstruktur (100) oder der vordere Abschnitt des Rahmens (30) Verankerungsscharniere (102) umfasst;
die andere entweder modulare Vorderstruktur (100) oder der andere vordere Abschnitt des Rahmens (30) Löcher (103) umfasst und
wobei sofern die modulare Vorderstruktur (100) entfernbar am vorderen Abschnitt des Rahmens (30) befestigt ist, die Löcher (103) mit den Verankerungsscharnieren (102) ausgerichtet sind und über Befestigungsteile befestigt werden.

5. Dreirädriges Fahrzeug nach Anspruch 4, **dadurch gekennzeichnet, dass:**
die modulare Vorderstruktur (100) einen oberen Abschnitt (106) enthält, mit einer Öffnung (122), die Zugang zum Stauraum (120) gewährt und
eine Zugangsklappe (90) entfernbar mit der modularen Vorderstruktur (100) zum Abdecken des oberen Abschnitts (106) der modularen Vorderstruktur (100) und zum Verschließen der Öffnung (122) befestigt ist.

6. Dreirädriges Fahrzeug nach Anspruch 5, **dadurch gekennzeichnet, dass:**
die Zugangsklappe (90) von der modularen Vorderstruktur (100) entfernt werden kann, um Zugang zu den Verankerungsscharnieren (102) und Löchern (103) zum entfernbaren Befestigen der modularen Vorderstruktur (100) am vorderen Abschnitt des Rahmens (30) zu erhalten.

7. Dreirädriges Fahrzeug nach Anspruch 5, **dadurch gekennzeichnet, dass:**
die Zugangsklappe (90) relativ zur modularen Vorderstruktur (100) zwischen einer offenen Position und einer geschlossenen Position beweglich ist, wobei die Zugangsklappe (90) Zugang zu den Verankerungsscharnieren (102) und Löchern (103) ermöglicht, wenn sich diese eine der offenen Position zur entfernbaren Befestigung der modularen Vorderstruktur (100) am vorderen Abschnitt des Rahmens (30) befindet.

8. Dreirädriges Fahrzeug nach einem der Ansprüche 1 bis 7, **dadurch gekennzeichnet, dass:**
entweder die modulare Vorderstruktur (100) oder der vordere Abschnitt des Rahmens (30) Scharniere (134) umfasst und
die andere modulare Vorderstruktur (100) oder der andere vordere Abschnitt des Rahmens (30) Kanäle (132) umfasst, die derart angepasst sind, um die Scharniere (134) zum entfernbaren Befestigen der modularen Vorderstruktur (100) am vorderen Abschnitt des Rahmens (30) über Befestigungsteile aufzunehmen.

9. Dreirädriges Fahrzeug nach einem der Ansprüche 4 bis 8, **dadurch gekennzeichnet, dass** wenn die modulare Vorderstruktur (100) am vorderen Abschnitt des Rahmens (30) befestigt ist, Zugang zu den Befestigungsteilen zum Entfernen der modularen Vorderstruktur (100) vom vorderen Abschnitt aus zum Rahmen (30) erhalten werden kann, ohne die Vielzahl an Verkleidungsbauteilen (86, 94, 95) von der modularen Vorderstruktur (100) abbauen zu müssen.

10. Dreirädriges Fahrzeug nach Anspruch 5, **dadurch gekennzeichnet, dass** eine Breite des Stauraums (120) breiter als die Breite der Öffnung (122) ist.

11. Dreirädriges Fahrzeug nach einem der Ansprüche 1 bis 10, ferner umfassend eine Vielzahl an hinteren Verkleidungsbauteilen (62, 64), die zu einem hinteren Abschnitt (112) zusammengebaut sind;
**dadurch gekennzeichnet, dass** die Vielzahl an Verkleidungsbauteilen (86, 94, 95) des vorderen Abschnitts (110) mit wenigstens einer der Vielzahl an hinteren Verkleidungsbauteilen (62, 64) des hinteren Abschnitts (112) entfernbar über Befestigungsteile (137) verbunden ist, wenn der vordere Abschnitt (110) entfernbar am hinteren Abschnitt (112) befestigt ist.

12. Dreirädriges Fahrzeug nach einem der Ansprüche 1 bis 11, **dadurch gekennzeichnet, dass** die Vielzahl an Verkleidungsbauteilen (86, 94, 95) über Befestigungsteile entfernbar mit dem vorderen Abschnitt des Rahmens (30) verbunden ist.

13. Dreirädriges Fahrzeug nach einem der Ansprüche 1 bis 12, **dadurch gekennzeichnet, dass** die modulare Vorderstruktur (100) ein integriertes Bauteil mit Verstärkungselementen (104) ist, um die lasttragende Kapazität der modularen Vorderstruktur (100) zu erhöhen.

## Revendications

1. Un véhicule à trois roues comportant les éléments suivants :
une partie arrière (112) pourvue :
d'un châssis (30) composé d'une partie avant et d'une partie arrière;
d'un moteur (19) soutenu par le châssis (30);
d'une roue avant gauche (36) et d'une roue avant droite (38), chacune étant reliée à la partie avant du châssis (30) au moyen de la suspension avant;
d'une roue arrière unique (32) reliée à la partie arrière du châssis (30) au moyen d'une suspension arrière (34), au moins une des roues (32, 36, 38) est reliée de manière fonctionnelle au moteur (19);
d'un module de direction (40) soutenu par le châssis (30) et relié de manière fonctionnelle à la roue avant gauche (36) et à la roue avant droite (38); et
un siège enjambeur (22) disposé sur le châssis (30); et
une partie avant (110) constituée de :
nombreux composants de carénage (86, 94, 95) reliés, de manière amovible, à la partie avant du châssis (30);
les caractéristiques sont les suivantes :
la partie avant (110) comprend une structure modulaire avant (100) qui soutient les nombreux composants de carénage (86, 94, 95), la structure modulaire avant (100) est située, en partie du moins, entre la roue avant gauche (36) et la roue avant droite (38) et elle est fixée, de manière amovible, à la partie avant du châssis (30) au moyen des nombreux points d'ancrage (102, 103, 132, 134), la structure modulaire avant (100) comprend une cavité qui définit un compartiment de rangement (120);
les nombreux composants de carénage (86, 94, 95) sont adaptés pour être assemblés à la structure modulaire avant (100) au moyen des nombreux points de fixation (126, 128, 130) avant de monter, de manière amovible, la structure modulaire avant (100) à la partie avant du châssis (30);
la partie avant (110) est montée, de manière amovible, en monopièce sur la partie arrière (112), ce qui est fait en montant, de manière amovible, la structure modulaire avant (100) sur la partie avant du châssis (30); et
enlever la structure modulaire avant (100) de la partie avant du châssis (30) réduit la longueur du véhicule à trois roues.

2. Un véhicule à trois roues, tel que décrit dans la revendication 1, présente les caractéristiques suivantes :
enlever la structure modulaire avant (100) de la partie avant du châssis (30) ainsi que la roue avant gauche (36) et la roue avant droite (38) de la partie avant du châssis (30) réduit davantage la longueur du véhicule à trois roues.

3. Un véhicule à trois roues, tel que décrit dans les revendications 1 et 2, présente les caractéristiques suivantes :
la roue avant gauche (36) et la roue avant droite (38) présentent chacune un centre et une ligne les traversant (36, 38), ce qui définit l'axe des roues avant; et
lorsque la partie avant (110) amovible est montée à la partie arrière (112), la structure modulaire avant (100) est située à l'avant de l'axe des roues avant.

4. Un véhicule à trois roues, tel que décrit dans l'une des revendications 1 à 3, présente les caractéristiques suivantes :
une des structures modulaires avant (100) et la partie avant du châssis (30) comprennent des supports d'ancrage (102);
l'autre structure modulaire avant (100) et la partie avant du châssis (30) sont pourvues de trous (103); et
lorsque la structure modulaire avant amovible (100) est montée sur la partie avant du châssis (30), les trous (103) sont alignés sur les supports d'ancrage (102) qui sont fixés au moyen d'attaches.

5. Un véhicule à trois roues, tel que décrit dans la revendication 4, présente les caractéristiques suivantes :
la structure modulaire avant (100) comprend une partie supérieure (106) qui est pourvue d'une ouverture (122) donnant accès au compartiment de rangement (120); et
une panneau d'accès (90) est reliée, de manière amovible, à la structure modulaire avant (100) pour couvrir la partie supérieure (106) de la structure modulaire avant (100) et pour fermer l'ouverture (122).

6. Un véhicule à trois roues, tel que décrit dans la revendication 5, présente les caractéristiques suivantes :
la panneau d'accès (90) peut être enlevée de la structure modulaire avant (100) pour permettre d'accéder aux supports d'ancrage (102) et aux trous (103) afin de pouvoir monter de manière amovible la structure modulaire avant (100) sur la partie avant du châssis (30).

7. Un véhicule à trois roues, tel que décrit dans la revendication 5, présente les caractéristiques suivantes :
le panneau d'accès (90) est amovible par rapport à la structure modulaire avant (100), à savoir qu'il peut passer de la position ouverte à la position fermée, le panneau d'accès (90) permet d'accéder aux supports d'ancrage (102) et aux trous (103) lorsqu'il est en position ouverte, ce qui permet de monter, de manière amovible, la structure modulaire avant (100) sur la partie avant du châssis (30).

8. Un véhicule à trois roues, tel que décrit dans l'une des revendications 1 à 7, présente les caractéristiques suivantes :
une des structures modulaires avant (100) et la partie avant du châssis (30) comportent des supports (134); et
l'autre structure modulaire avant (100) et la partie avant du châssis (30) sont pourvues de rainures (132) adaptées pour recevoir les supports (134) afin de monter, de manière amovible, la structure modulaire avant (100) sur la partie avant du châssis (30) au moyen d'attaches.

9. Un véhicule à trois roues, tel que décrit dans l'une des revendications 4 à 8, présente les caractéristiques suivantes :
lorsque la structure modulaire avant (100) est montée sur la partie avant du châssis (30), on peut accéder aux attaches pour enlever la structure modulaire avant (100) de la partie avant du châssis (30) sans démonter les nombreux composants de carénage (86, 94, 95) de la structure modulaire avant (100).

10. Un véhicule à trois roues, tel que décrit dans la revendication 5, présente les caractéristiques suivantes : le compartiment de rangement (120) est plus large que son ouverture (122).

11. Un véhicule à trois roues, tel que décrit dans l'une des revendications 1 à 10, comprend de nombreux composants de carénage arrière (62, 64) qui sont assemblés à la partie arrière (112);
il se **caractérise par le fait qu'**au moins un des nombreux composants de carénage (86, 94, 95) de la partie avant (110) est monté, de manière amovible, à l'aide d'attaches (137) à au moins un des composants de carénage arrière (62, 64) de la partie arrière (112) lorsque la partie avant (110) est montée, de manière amovible, sur la partie arrière (112).

12. Un véhicule à trois roues, tel que décrit dans l'une des revendications 1 à 11, présente les caractéristiques suivantes : les nombreux composants de carénage (86, 94, 95) peuvent être reliés, de manière amovible, à la partie avant du châssis (30) au moyen d'attaches.

13. Un véhicule à trois roues, tel que décrit dans l'une des revendications 1 à 12, présente les caractéristiques suivantes : la structure modulaire avant (100) est un composant moulé intégrant des éléments de renfort (104) pour accroître la force portante de la structure modulaire avant (100).
